# EUROPÄISCHE PATENTSCHRIFT

(11) **EP 4 035 564 B1**
(45) Veröffentlichungstag und Bekanntmachung des Hinweises auf die Patenterteilung: **17.12.2025**
(21) Anmeldenummer: 22174316.4
(22) Anmeldetag: 19.05.2022
(51) Int. Cl.: A46D 3/04, A46D 3/08, A46B 3/04, A46B 9/04, A46B 9/02, B29C 65/02

(54) **BÜRSTE, VERFAHREN ZUR HERSTELLUNG VON BÜRSTEN UND BÜRSTENHERSTELLUNGSVORRICHTUNG**
BRUSH, METHOD FOR MANUFACTURING BRUSHES AND BRUSH MANUFACTURING MACHINE
BROSSE, PROCÉDÉ DE FABRICATION DE BROSSES ET DISPOSITIF DE FABRICATION DE BROSSES

(43) Veröffentlichungstag der Anmeldung: 03.08.2022
(73) Patentinhaber: Zahoransky AG, 79674 Todtnau (DE)
(72) Erfinder: König, Marc, 79299 Wittnau (DE); Kumpf, Ingo, 79674 Schlechtnau (DE); Kiefer, Florian, 79677 Fröhnd (DE)
(74) Vertreter: Mertzlufft-Paufler, Cornelius

(56) Entgegenhaltungen:
- WO-A1-2018/177594
- DE-A1- 19 853 030
- DE-A1- 3 403 341
- US-A1- 2019 200 744

## Beschreibung

Die Erfindung betrifft eine Bürste, insbesondere eine Zahnbürste, mit einem Borstenträger und einem Borstenbesatz, der an dem Borstenträger befestigt ist, ein Verfahren zur Herstellung einer solchen Bürste sowie eine Bürstenherstellungsvorrichtung zur Herstellung von Bürsten dieser Art.

Die Druckschrift US 2019 200 744 A1 offenbart ein Mundpflegegerät mit Zahnreinigungselementen und einem elastomeren Weichgewebereiniger. Das Mundpflegegerät hat einen Griff und einen mit dem Griff gekoppelten Kopf, einen elastomeren Weichgewebereiniger mit einer Vielzahl von Ausstülpungen, die sich von einer hinteren Oberfläche des Kopfes erstrecken, und eine Vielzahl von Zahnreinigungselementen, die sich von einer vorderen Oberfläche des Kopfes erstrecken. Die Ausstülpungen des elastomeren Weichgewebereinigers bilden zusammen ein konvexes Längsseitenprofil und umfassen mindestens ein konvexes Queroberprofil. Die mehreren Zahnreinigungselemente bilden zusammen ein konkaves Längsseitenprofil und umfassen mindestens ein konkaves Queroberflächenprofil.

Die Druckschriften WO 2018 177 594 A1 und DE 198 53 030 A1 offenbaren jeweils ein Verfahren zur Herstellung von Borstenwaren, indem ein Borstenträger aus thermoplastischem Kunststoff mit Aufnahmen für die Borsten hergestellt, die Borsten mit ihren befestigungsseitigen Enden in die Aufnahmen eingeführt und durch Einwirken mechanischer Kräfte auf den Borstenträger an diesem befestigt werden. Das vorbekannte Verfahren ist dadurch gekennzeichnet, dass der Borstenträger nach dem Einführen der Borsten in die Aufnahmen an seiner die Aufnahmen aufweisenden Oberfläche derart mit Druck beaufschlagt wird, dass der Borstenträger unter Reduzierung seiner Bauhöhe gestaucht und dabei Masse des Borstenträgers unter Verengung der Aufnahmen an die befestigungsseitigen Enden der Borsten diese seitlich umschließend verdrängt wird.

Die Druckschrift DE 34 03 341 A1 offenbart ein Verfahren zum Verbinden von Borsten mit einem Borstenträger, die jeweils aus thermoplastischem Kunststoff bestehen, indem die Borsten an ihrem einen Ende und der Borstenträger an seiner Borsten-Aufnahmeseite aufgeschmolzen, anschließend Borsten und Borstenträger zusammengeführt und in dieser Lage gegebenenfalls bis zum Erstarren der Schmelze gehalten werden.

Für die Benutzung insbesondere einer Zahnbürste kann es vorteilhaft sein, wenn der Borstenträger, insbesondere ein Bürstenkopf, der Zahnbürste möglichst kompakt gestaltet ist. Ein kompakter Bürstenkopf wird in der Mundhöhle von einer die Zahnbürste benutzenden Person in der Regel als angenehmer empfunden als größere Bürstenköpfe.

Als kompakt kann ein Bürstenkopf beispielsweise dann empfunden werden, wenn der Bürstenkopf einen möglichst geringen seitlichen Überstand zu dem Borstenbesatz und außerdem im Verhältnis zu einem Volumen des Borstenbesatzes ein möglichst geringes Volumen hat. Wünschenswert ist es, dass ein Gesamtvolumen, das von dem Borstenbesatz und dem Bürstenkopf eingenommen wird, zu überwiegenden Teilen aus dem Volumen des Borstenbesatzes und damit aus dem Volumen der reinigungswirksamen Bestandteile der Bürste besteht.

Wünschenswert sind in diesem Zusammenhang daher auch möglichst geringe Randabstände des Borstenbesatzes zu einem Umfangsrand des Borstenträgers, insbesondere des Bürstenkopfes. Ein Ziel der Erfindung ist es somit, eine Bürste, insbesondere eine Zahnbürste, mit einem möglichst kompakten Bürstenkopf bereitzustellen, der bei Ausführung von Reinigungsbewegungen mit dem nutzungsseitigen Ende der Bürste beispielsweise in einer Mundhöhle für eine die Bürste benutzende Person als wenig störend empfunden wird.

Aber auch bei anderen Bürsten, kann es für deren Gebrauchseigenschaften vorteilhaft sein, den Borstenträger beispielsweise durch geringe Randabstände des Borstenbesatzes zu einem Umfangsrand des Borstenträgers kompakt zu gestalten. Ferner spielen bei Bürsten auch der Umweltschutz und die Möglichkeit zum Recycling von Bürsten eine zunehmende Rolle. In diesem Zusammenhang ist es wünschenswert, Bürsten bereitzustellen, die sich vergleichsweise einfach recyceln lassen. Auch die wirtschaftliche Fertigung der Bürsten ist von Bedeutung.

Aufgabe der Erfindung ist es daher, eine Bürste mit verbesserten Gebrauchseigenschaften und Herstellungseigenschaften sowie ein Verfahren zur Herstellung einer solchen Bürste und eine entsprechende Bürstenherstellungsvorrichtung bereitzustellen.

Zur Lösung dieser Aufgabe wird zunächst eine Bürste mit den Merkmalen des unabhängigen, auf eine Bürste gerichteten Anspruchs 1 vorgeschlagen. Zur Lösung der Aufgabe wird somit eine Bürste, beispielsweise eine Zahnbürste, mit einem Borstenträger und einem Borstenbesatz aus Borstenfilamenten vorgeschlagen, wobei der Borstenträger zumindest eine Aufnahmevertiefung aufweist, in der die Borstenfilamente mit ihren befestigungsseitigen Enden befestigt sind, und wobei die Aufnahmevertiefung durch zur Befestigung der Borstenfilamente aufgeschmolzenes Filamentmaterial der befestigungsseitigen Enden ganz oder zum Teil ausgefüllt ist. Insbesondere dann, wenn die Bürste als Zahnbürste ausgebildet ist, kann der Borstenträger, an dem der Borstenbesatz aus Borstenfilamenten befestigt ist, ein Bürstenkopf der Bürste sein.

Dadurch, dass das aufgeschmolzene Filamentmaterial der befestigungsseitigen Enden der Borstenfilamente die Aufnahmevertiefung im Borstenträger ganz oder zumindest zum Teil ausfüllt, kann der Borstenträger vor Befestigung der Borstenfilamente in der Aufnahmevertiefung eine vergleichsweise filigrane Gestalt haben. Auf diese Weise wird eine Bürste bereitgestellt, deren Borstenträger eine möglichst kompakte Gestalt hat und nur ein vergleichsweise geringes randseitiges Übermaß zum Borstenbesatz am Borstenträger aufweisen kann.

Bei einer Teilausfüllung der Aufnahmevertiefung kann es vorteilhaft sein, wenn die Aufnahmevertiefung zu einem überwiegenden Teil mit dem aufgeschmolzenen Filamentmaterial ausgefüllt ist.

Ein besonders stabiler und gleichzeitig kompakter Borstenträger wird geschaffen, wenn die Aufnahmevertiefung durch das aufgeschmolzene Filamentmaterial der befestigungsseitigen Enden der Borstenfilamente ganz ausgefüllt ist.

Die Befestigung der Borstenfilamente an dem Borstenträger kann bei der erfindungsgemäßen Bürste durch eine Wechselwirkung zwischen dem Filamentmaterial und dem Material des Borstenträgers erfolgen. Auf separate Befestigungsmittel, wie beispielsweise Anker, die zur Befestigung der Borstenfilamente eine gewisse Mindestmaterialstärke des Borstenträgers erfordern, kann bei der erfindungsgemäßen Bürste verzichtet werden.

Bei einer Ausführungsform der Bürste ist vorgesehen, dass der Borstenträger vor Befestigung der Borstenfilamente im Bereich der Aufnahmevertiefung seine geringste Materialstärke aufweist. Insbesondere kann der Borstenträger vor Befestigung der Borstenfilamente im Bereich der Aufnahmevertiefung seine geringste in Richtung einer Normalen auf die Aufnahmevertiefung messbare Materialstärke aufweisen. Die Aufnahmevertiefung im Borstenträger kann somit zum Zwecke der Minimierung des Volumens des Borstenträgers einen Bereich darstellen, in dem zunächst möglichst wenig Material vorhanden ist. Dieser Bereich kann somit zunächst eine mechanische Schwachstelle der Bürste darstellen. Durch Ausfüllen der Aufnahmevertiefung mit dem aufgeschmolzenen Filamentmaterial ist diese Schwachstelle an der fertigen Bürste nach Befestigung der Borstenfilamente jedoch kompensiert.

So ist es möglich, dass der Borstenträger durch das aufgeschmolzene Material verstärkt und insbesondere komplettiert ist. Das aufgeschmolzene Filamentmaterial wird somit Teil des Borstenträgers, nachdem es innerhalb der Aufnahmevertiefung erstarrt ist. Dies ermöglicht die gewünschte filigrane und kompakte Gestaltung des Borstenträgers.

Innerhalb der Aufnahmevertiefung kann zumindest eine Versteifungsrippe ausgebildet sein. Die Versteifungsrippe kann innerhalb der Aufnahmevertiefung und/oder durch die Aufnahmevertiefung des Borstenträgers verlaufen. Die zumindest eine Versteifungsrippe kann hierbei einen gewissen Abstand zum Rand des Borstenträgers aufweisen oder auch mit dem Rand des Borstenträgers verbunden sein. Die zumindest eine Versteifungsrippe kann die mechanische Stabilität des Borstenträgers vor Befestigung der Borstenfilamente an dem Borstenträger erhöhen. Dies kann die Handhabung des Borstenträgers bei der Herstellung der Bürste vereinfachen.

Das aufgeschmolzene Filamentmaterial der befestigungsseitigen Enden der Borstenfilamente bildet eine Trägerplatte, die die Aufnahmevertiefung nach Befestigung der Borstenfilamente an dem Borstenträger ausfüllt. Es ist möglich, dass eine Oberfläche der Trägerplatte nach Befestigung der Borstenfilamente an dem Borstenträger bündig mit einer an die Aufnahmevertiefung und den Borstenbesatz angrenzenden Bürstenoberfläche der Bürste, insbesondere des Borstenträgers, ist. Auf diese Weise wird ein stufenloser Übergang zwischen einer Vorderseite der Trägerplatte aus geschmolzenem Filamentmaterial, an der die Borstenfilamente angeordnet sind, und einer Bürstenoberfläche, die die geschlossene Aufnahmevertiefung und den Borstenbesatz umgibt, erzeugt. Ein derartig stufenloser Übergang kann einer Ansammlung von Verschmutzungen und einer damit verbundenen Verkeimung der Bürste entgegenwirken. Insbesondere bei Zahnbürsten ist dies von besonderer Bedeutung.

Für die Herstellung der Bürste bestehen die Borstenfilamente und der Borstenträger zumindest im Bereich der Aufnahmevertiefung erfindungsgemäß aus für eine stoffschlüssige Verbindung kompatiblen Werkstoffen oder aus demselben, für eine stoffschlüssige Verbindung geeigneten Werkstoff. Auf diese Weise lässt sich eine zuverlässige und belastbare stoffschlüssige Verbindung zwischen den Borstenfilamenten und dem Borstenträger der Bürste erzeugen, bei der auf separate Befestigungsmittel für die Borstenfilamente, wie beispielsweise Anker, verzichtet werden kann.

Insbesondere dann, wenn die Borstenfilamente und der Borstenträger aus demselben Werkstoff bestehen, kann eine so genannte Einstoffbürste bereitgestellt werden, die sich besonders einfach recyceln lässt. Eine derartige Bürste muss beim Recycling nicht in ihre unterschiedlichen Bestandteile zerlegt werden.

Die in der Aufnahmevertiefung befestigten Borstenfilamente und der Borstenträger können eine stofflich homogene, monolithische Einheit bilden. Die Borstenfilamente und der Borstenträger sind erfindungsgemäß stoffschlüssig miteinander verbunden. Auf diese Weise kann auf separate Mittel zur Befestigung der Borstenfilamente an dem Borstenträger verzichtet werden. Dies kann die Herstellung, aber auch das Recycling derartiger Bürsten vereinfachen.

Die Borstenfilamente und der Borstenträger - zumindest im Bereich der Aufnahmevertiefung - können aus Kunststoff, beispielsweise aus biologisch abbaubarem Kunststoff, insbesondere aus Polyamid, vorzugsweise aus PA 10.10 oder PA 12 bestehen. Insbesondere dann, wenn der Borstenträger und die Borstenfilamente aus biologisch abbaubarem Kunststoff bestehen, wird eine Bürste bereitgestellt, die besonders umweltfreundlich ist und sich besonders einfach recyceln lässt.

Der Borstenträger kann einen die Aufnahmevertiefung begrenzenden Rand aufweisen. Dieser Rand kann eine Begrenzung der Aufnahmevertiefung darstellen und das aufgeschmolzene Filamentmaterial der befestigungsseitigen Enden der Borstenfilamente bei der Verbindung der Borstenfilamente mit dem Borstenträger derart leiten, dass eine vollständige Ausfüllung der Aufnahmevertiefung bei der Verbindung der Borstenfilamente mit dem Borstenträger zuverlässig gelingt.

Wenn in dem Rand zumindest eine Ausnehmung ausgebildet ist, die durch das aufgeschmolzene Filamentmaterial, vorzugsweise bündig mit benachbarten Randabschnitten, ganz oder zum Teil ausgefüllt ist, kann der Borstenbesatz zumindest im Bereich dieser zumindest einen Ausnehmung mit einem besonders geringen Randabstand zu einem Umfang, also einer Umfangsfläche, des Borstenträgers an dem Borstenträger befestigt sein. Insbesondere bei Zahnbürsten ist ein möglichst geringer Randabstand für die Benutzung der Zahnbürste günstig. Ein Kontakt des Borstenträgers mit dem Zahnfleisch einer die Zahnbürste benutzenden Person kann durch den geringen Randabstand minimiert werden. Die Bürste kann durch den geringen Randabstand des Borstenbesatzes zum Umfang des Borstenträgers eine kompakte Gestalt aufweisen. Die Verwendung einer solchen Bürste wird in der Regel als angenehmer empfunden als die Verwendung einer Bürste mit einem Borstenträger, insbesondere Bürstenkopf, der ein größeres Volumen aufweist.

Zur Lösung der Aufgabe wird auch ein Verfahren zur Herstellung einer derartigen Bürste vorgeschlagen, das die Mittel und Merkmale des auf ein Verfahren zur Herstellung einer Bürste gerichteten, unabhängigen Anspruchs 9 aufweist. Bei dem Verfahren ist erfindungsgemäß vorgesehen, dass die befestigungsseitigen Enden der Borstenfilamente zur Verbindung der Borstenfilamente mit dem Borstenträger erwärmt und die Aufnahmevertiefung durch dabei aufgeschmolzenes Filamentmaterial der befestigungsseitigen Enden der Borstenfilamente beim Befestigen der Borstenfilamente an dem Borstenträger ganz oder zum Teil ausgefüllt wird.

Ein besonders stabiler und kompakter Borstenträger wird geschaffen, wenn die Aufnahmevertiefung ganz mit dem aufgeschmolzenen Filamentmaterial ausgefüllt wird. Bei einer Teilausfüllung der Aufnahmevertiefung kann es für die Stabilität des Borstenträgers vorteilhaft sein, wenn die Aufnahmevertiefung zu einem überwiegenden Teil mit dem aufgeschmolzenen Filamentmaterial ausgefüllt wird.

Dabei können die Borstenfilamente stoffschlüssig in der Aufnahmevertiefung mit dem Borstenträger verbunden werden. Der Borstenträger kann durch die Befestigung der Borstenfilamente in der Aufnahmevertiefung durch das Ausfüllen der Aufnahmevertiefung komplettiert und verstärkt werden.

Bei einer Ausführungsform des Verfahrens ist vorgesehen, dass die befestigungsseitigen Enden der Borstenfilamente und der Borstenträger im Bereich der Aufnahmevertiefung erwärmt werden.

Die Borstenfilamente und der Borstenträger können bei der Befestigung der Borstenfilamente in der Aufnahmevertiefung stoffschlüssig miteinander verbunden werden. Hierfür kann es ausreichen, wenn die befestigungsseitigen Enden der Borstenfilamente auf eine höhere Temperatur als der Borstenträger im Bereich der Aufnahmevertiefung erwärmt werden. Vorzugsweise werden die befestigungsseitigen Enden der Borstenfilamente auf eine Temperatur erwärmt, bei der die befestigungsseitigen Enden der Borstenfilamente schmelzen. Dabei können sich befestigungsseitigen Enden der Borstenbündel zu zumindest einer Trägerplatte vereinen.

Der Borstenträger muss nicht zwangsweise auf eine vergleichbar hohe Temperatur erwärmt werden. Vielmehr kann es ausreichen, wenn der Borstenträger auf eine Temperatur erwärmt wird, bei der er erweicht, aber nicht schmilzt. Dies kann für eine zuverlässige Verbindung der Borstenfilamente mit dem Borstenträger im Bereich der Aufnahmevertiefung ausreichen. Wenn der Borstenträger weniger stark als die Borstenfilamente erwärmt wird, kann der Borstenträger schneller abkühlen. Dies kann zu einer geringeren Prozesszeit bei der Herstellung der Bürste führen und die Wirtschaftlichkeit des Verfahrens erhöhen.

Wenn die Bürste, insbesondere der Borstenträger, einen Rand aufweist, der die Aufnahmevertiefung seitlich begrenzt, und in diesem Rand zumindest eine Ausnehmung vorhanden ist, kann diese Ausnehmung durch das Filamentmaterial der befestigungsseitigen Enden, vorzugsweise bündig mit angrenzenden Randabschnitten, ganz oder zum Teil ausgefüllt werden. So kann der Borstenbesatz einen möglichst geringen Randabstand zu einem Umfang des Borstenträgers einnehmen und zudem ein versatzfreier Umfang gebildet werden. Ein versatzfreier Umfang kann die Handhabung der Bürste, insbesondere wenn sie als Zahnbürste ausgebildet ist, begünstigen und zudem einer Anhaftung von Verschmutzungen und einer Verkeimung der Bürste entgegenwirken.

Der Borstenträger kann zur Befestigung der Borstenfilamente in der Aufnahmevertiefung in eine Form eingesetzt werden. Die Form kann eine Formwand aufweisen, die die Aufnahmevertiefung des Borstenträgers zumindest abschnittsweise seitlich umgibt. Die Form kann den Borstenträger derart umgeben, dass ein Rand des Borstenträgers, der die Aufnahmevertiefung quer zu einer Längserstreckungsrichtung der Borstenfilamente an der Bürste begrenzt, seitlich abgestützt wird. Die Form kann somit dazu beitragen, das aufgeschmolzene Filamentmaterial der Borstenfilamente bei der Verbindung der Borstenfilamente mit dem Borstenträger so zu führen, dass die Aufnahmevertiefung bei der Verbindung der Borstenfilamente mit dem Borstenträger zuverlässig ganz oder zum Teil ausgefüllt wird und ein seitliches Austreten des aufgeschmolzenen Filamentmaterials verhindert werden kann.

Der Borstenträger kann nach Ausfüllen der Aufnahmevertiefung durch das Filamentmaterial der befestigungsseitigen Enden gekühlt werden. Dies kann beispielsweise durch Wärmeleitung über die Form und/oder eine nachfolgend noch näher erläuterte Kühlvorrichtung einer Bürstenherstellungsvorrichtung erfolgen.

Zur Lösung der Aufgabe wird auch eine Bürstenherstellungsvorrichtung zur Herstellung von Bürsten, wie sie zuvor beschrieben wurden, vorgeschlagen, die die Mittel und Merkmale des unabhängigen, auf eine derartige Bürstenherstellungsvorrichtung gerichteten Anspruchs 15 aufweist. Dabei ist die Bürstenherstellungsvorrichtung zur Ausführung des Verfahrens zur Herstellung einer Bürste nach einem der auf ein solches Verfahren gerichteten Ansprüche eingerichtet.

Erfindungsgemäß wird bei der Bürstenherstellungsvorrichtung zur Lösung der Aufgabe somit vorgeschlagen, dass die Bürstenherstellungsvorrichtung eine Heizvorrichtung aufweist, die zwei Heizflächen umfasst, von denen eine erste Heizfläche zur Erwärmung von befestigungsseitigen Enden von Borstenfilamenten und eine zweite Heizfläche zur Erwärmung eines Borstenträgers in einem Bereich seiner Aufnahmevertiefung vorgesehen ist.

Die Heizflächen können zur Abgabe von Wärmestrahlung eingerichtet sein, um die Borstenfilamente und den Borstenträger berührungslos zu erwärmen.

Vorzugsweise ist die Heizvorrichtung dazu eingerichtet, die Heizflächen auf unterschiedliche Temperaturen zu erwärmen. Die Heizvorrichtung kann dazu eingerichtet sein, die erste Heizfläche auf eine Temperatur zu erwärmen, die ausreicht, um befestigungsseitige Enden von Borstenfilamenten aufzuschmelzen.

Ferner ist es möglich, dass die beiden Heizflächen an einem gemeinsamen Heizelement insbesondere an unterschiedlichen Seiten des Heizelements, beispielsweise an einander abgewandten Seiten des Heizelements, angeordnet sind.

Vor der Verbindung der Borstenfilamente mit dem Borstenträger kann das Heizelement in einen Zwischenraum zwischen die bereitgehaltenen Borstenfilamente und den Borstenträger angeordnet werden, um die Borstenfilamente und den Borstenträger zu erwärmen. Durch das Erwärmen der befestigungsseitigen Enden der Borstenfilamente können diese schmelzen. Nach Erwärmen der Borstenfilamente einerseits und des Borstenträgers andererseits können das Heizelement entfernt und die Borstenfilamente mit ihren befestigungsseitigen Enden in die Aufnahmevertiefung des Borstenträgers eingesetzt werden. Dabei kann die Aufnahmevertiefung mit dem aufgeschmolzenen Filamentmaterial der befestigungsseitigen Enden der Borstenfilamente ganz oder zum Teil ausgefüllt werden, um den Borstenträger zu komplettieren und zu verstärken und die Borstenfilamente an dem Borstenträger zu befestigen.

Die Heizvorrichtung kann zur Regelung der Temperaturen der beiden Heizflächen eingerichtet sein. Zur Regelung der Temperaturen kann die Heizvorrichtung eine entsprechende Steuereinheit aufweisen. Zur Erfassung der Temperatur zumindest einer der beiden Heizflächen und zur Regelung der Temperatur kann die Heizvorrichtung zumindest einen Temperatursensor aufweisen. Vorzugsweise ist jeder Heizfläche der Heizvorrichtung zumindest ein Temperatursensor zugeordnet. Dies begünstigt eine möglichst genaue Temperaturregelung der Heizflächen bei der Durchführung des Verfahrens auf der Bürstenherstellungsvorrichtung.

Die Bürstenherstellungsvorrichtung kann ferner eine Form zur Aufnahme und Abstützung des Borstenträgers aufweisen. In diese Form kann der Borstenträger zur Verbindung der Borstenfilamente mit dem Borstenträger eingesetzt werden. Der Borstenträger kann bereits schon dann in dieser Form angeordnet sein, wenn der Borstenträger im Bereich seiner Aufnahmevertiefung mit der Heizvorrichtung der Bürstenherstellungsvorrichtung erwärmt wird.

Wie bereits zuvor im Zusammenhang mit dem Verfahren zur Herstellung einer Bürste erläutert, kann die Form eine gezielte Verteilung des aufgeschmolzenen Filamentmaterials der befestigungsseitigen Enden der Borstenfilamente innerhalb der Aufnahmevertiefung begünstigen. Die Form kann somit dazu beitragen, dass die Aufnahmevertiefung im Borstenträger bei der Befestigung der Borstenfilamente zuverlässig ganz oder zum Teil ausgefüllt wird.

Die Bürstenherstellungsvorrichtung kann ferner eine Profilierungsvorrichtung zur Profilierung eines Borstenbesatzes einer herzustellenden Bürste aufweisen. Mithilfe der Profilierungsvorrichtung ist es möglich, insbesondere reinigungsseitige Enden der Borstenfilamente des Borstenbesatzes der herzustellenden Bürste in eine gewünschte Form zu bringen, also dem Borstenbesatz an seiner Reinigungsseite eine gewünschte Kontur zu verleihen.

Die Kontur des Borstenbesatzes kann durch unterschiedliche Überstandslängen der einzelnen Borstenfilamente des Borstenbesatzes an der Vorderseite des Borstenträgers erzielt werden. Die Profilierungsvorrichtung kann dazu eingerichtet sein, die unterschiedlichen Überstandslängen der Borstenfilamente durch ein in Bezug auf eine Längsachse der einzelnen Borstenfilamente ausgerichtetes, axiales Verschieben der Borstenfilamente zu erzeugen.

Bei einer Ausführungsform der Profilierungsvorrichtung kann diese ein Profilierungswerkzeug zur Profilierung einer Reinigungsseite des Borstenbesatzes und/oder ein Gegenprofilierungswerkzeug zur Profilierung einer Befestigungsseite des Borstenbesatzes und/oder zum Abstützen der Borstenfilamente bei der Profilierung aufweisen.

Das Profilierungswerkzeug und das Gegenprofilierungswerkzeug können dabei aufeinander abgestimmte Konturen aufweisen. Das Profilierungswerkzeug, das an einer Reinigungsseite des Borstenbesatzes angreift, kann eine Negativkontur der herzustellenden Kontur des Borstenbesatzes aufweisen. Mithilfe des Gegenprofilierungswerkzeugs können befestigungsseitige Enden des Borstenbesatzes vor Befestigung des Borstenbesatzes an dem Borstenträger entsprechend abgestützt und/oder profiliert werden.

Dabei kann das Gegenprofilierungswerkzeug dieselbe Kontur aufweisen, wie der Borstenbesatz nach der Profilierung. Die zuvor erläuterte Axialverschiebung der einzelnen Borstenfilamente zur Herstellung des profilierten Borstenbesatzes kann im Zusammenspiel des Profilierungswerkzeugs mit dem Gegenprofilierungswerkzeug erfolgen.

Unterschiedliche Überstände der befestigungsseitigen Enden der Borstenfilamente an der Befestigungsseite des Borstenbesatzes, die nach der Profilierung gegebenenfalls vorhanden sind, können beim Aufschmelzen der befestigungsseitigen Enden der Borstenfilamente egalisiert werden.

Die Bürstenherstellungsvorrichtung kann einen Filamenthalter aufweisen, der zum, insbesondere klemmenden, Halten der Borstenfilamente des Borstenbesatzes eingerichtet ist. Der Filamenthalter kann beispielsweise bei der Profilierung des Borstenbesatzes vor Befestigung des Borstenbesatzes an dem Borstenträger verwendet werden, aber auch zum Halten des gegebenenfalls schon profilierten Borstenbesatzes beim Erwärmen und Aufschmelzen der befestigungsseitigen Enden der Borstenfilamente. Auch bei der Befestigung der Borstenfilamente in der Aufnahmevertiefung des Borstenträgers kann der Filamenthalter die Borstenfilamente des Borstenbesatzes noch halten und erst nach erfolgreicher Befestigung der Borstenfilamente an dem Borstenträger freigeben. Zum klemmenden Halten von Borstenfilamenten kann der Filamenthalter eine lösbare Klemmung aufweisen.

Der Filamenthalter kann ein Lochbild von Aufnahmelöchern für Borstenbündel aus Borstenfilamenten aufweisen, das einer Bündelanordnung von Borstenbündeln im Borstenbesatz entspricht. Auf diese Weise können die Borstenfilamente mit dem Filamenthalter in ihrer für die Befestigung an dem Borstenträger und im Borstenbesatz der herzustellenden Bürste vorgesehenen Anordnung bereitgehalten werden. Vorzugsweise sind die Aufnahmelöcher als Durchgangslöcher ausgebildet. So können die in den Aufnahmelöchern befindlichen Borstenfilamente und Borstenbündel in einer in Bezug auf ihre Längsachsen axialen Bewegung aus den Aufnahmelöchern geschoben werden, beispielsweise um die befestigungsseitigen Enden der Borstenfilamente in die Aufnahmevertiefung eines Borstenträgers zu drücken und die Borstenfilamente mit dem Borstenträger zu verbinden.

Der Filamenthalter kann beispielsweise als Kassette ausgebildet sein und/oder zwischen einzelnen Stationen der Bürstenherstellungsvorrichtung transportierbar sein.

Vorteilhaft kann es ferner sein, wenn die Bürstenherstellungsvorrichtung eine Kühlvorrichtung zur Kühlung von Borstenträgern, insbesondere nach erfolgreicher Befestigung der Borstenfilamente an dem Borstenträger, aufweist. Mithilfe der Kühlvorrichtung können ein Abkühlen der Borstenträger beschleunigt und so eine Prozesszeit bei der Herstellung der Bürsten reduziert werden.

Die Bürstenherstellungsvorrichtung kann ferner ein Magazin zur Aufnahme eines Vorrats an losen Borstenfilamenten aufweisen.

Dem Magazin nachgelagert kann die Bürstenherstellungsvorrichtung eine Bündelabteilvorrichtung umfassen, die dazu eingerichtet ist, Borstenbündel aus dem im Magazin enthaltenen Vorrat loser Borstenfilamente auszufassen und für die Zusammenstellung eines Borstenbesatzes bereitzustellen.

Die Bürstenherstellungsvorrichtung kann ferner eine Bündelumformeinheit aufweisen, die dazu eingerichtet ist, die aus dem Borstenmagazin ausgefassten Borstenbündel in eine für die Herstellung der Bürsten gewünschte Zielform zu transformieren.

Aus der Bündelumformeinheit können die Borstenbündel dem bereits zuvor erwähnten Filamenthalter übergeben werden. In dem Filamenthalter können die Borstenbündel dann in einer Anordnung relativ zueinander gehalten sein, die sie auch im Borstenbesatz der herzustellenden Bürste später einnehmen.

Das Profilierungswerkzeug und/oder das Gegenprofilierungswerkzeug können jeweils als Profilplatten ausgebildet sein. Das Profilierungswerkzeug kann außerdem dazu eingerichtet sein, die in dem Filamenthalter bereitgehaltenen Borstenfilamente nach Aufschmelzen ihrer befestigungsseitigen Enden mit ihren befestigungsseitigen Enden in die Aufnahmevertiefung eines bereitgehaltenen Borstenträgers zu bewegen. In diesem Zusammenhang kann es vorteilhaft sein, wenn das Profilierungswerkzeug zur Ausführung dieser Bewegung beweglich gelagert ist.

Bei Zahnbürsten kann der Borstenbesatz, insbesondere in einem Bereich, in dem der Borstenbesatz benachbart zu einem Rand des Borstenträgers angeordnet ist, der die Aufnahmevertiefung begrenzt, einen quer zur Längserstreckung der Borstenfilamente messbaren Abstand zu einem Umfang des Borstenträgers von beispielsweise 0,5 mm bis 3 mm aufweisen. Bei großen Bürsten kann dieser Abstand beispielsweise 1 mm bis 6 mm betragen. Bei kleinen Bürsten kann dieser Abstand beispielsweise 0,2 mm bis 1 mm betragen.

Bei Zahnbürsten kann das aufgeschmolzene Filamentmaterial, also beispielsweise die zuvor erwähnte Trägerplatte, in einem Bereich, der von einem Rand des Borstenträgers begrenzt ist, einen quer zur Längserstreckung der Borstenfilamente messbaren Abstand zu einem Umfang des Borstenträgers von 0,3 mm bis 2 mm aufweisen. Bei großen Bürsten kann dieser Abstand beispielsweise 0,8 mm bis 4 mm betragen. Bei kleinen Bürsten kann dieser Abstand beispielsweise 0 mm bis 0,7 mm betragen.

Im Bereich einer Ausnehmung in einem die Aufnahmevertiefung umgebenden Rand des Borstenträgers kann das aufgeschmolzene Filamentmaterial, insbesondere die zuvor erwähnte Trägerplatte, bei Zahnbürsten einen quer zur Längserstreckung der Borstenfilamente messbaren Abstand zu einem Umfang des Borstenträgers von 0 mm bis 2 mm aufweisen. Bei großen Bürsten kann dieser Abstand beispielsweise 0 mm bis 4 mm betragen. Bei kleinen Bürsten kann dieser Abstand beispielsweise 0 mm bis 1 mm betragen.

Nach Befestigung der Borstenfilamente an dem Borstenträger kann der Borstenträger bei Zahnbürsten beispielsweise eine Materialstärke von 2 mm bis 6 mm aufweisen. Bei großen Bürsten kann der Borstenträger beispielsweise eine Materialstärke von 3 mm bis 10 mm aufweisen. Bei kleinen Bürsten kann der Borstenträger beispielsweise eine Materialstärke von 0,7 mm bis 2 mm aufweisen.

Die Aufnahmevertiefung kann vor Befestigung der Borstenfilamente an dem Borstenträger bei Zahnbürsten beispielsweise eine Materialstärke zwischen 1 mm bis 4 mm aufweisen, bei großen Bürsten 1,5 mm bis 6 mm und bei kleinen Bürsten beispielsweise 0,4 mm bis 1,5 mm.

Große Bürsten im Sinne der vorherigen Ausführungen können beispielsweise Handwaschbürsten sein. Kleine Bürsten können beispielsweise Bürsten zur Durchführung eines Abstrichs sein.

Die Erfindung wird nachfolgend anhand von Ausführungsbeispielen näher erläutert. Die Erfindung ist nicht auf die in den Figuren gezeigten Ausführungsbeispiele beschränkt. Weitere Ausführungsbeispiele der Erfindung ergeben sich durch Kombination der Merkmale einzelner Ansprüche und/oder durch Kombination der Merkmale einzelner oder mehrerer der gezeigten Ausführungsbeispiele. Es zeigen:
- Figuren 1 bis 4: unterschiedliche Ansichten einer als Zahnbürste ausgebildeten Bürste, wobei zu erkennen ist, dass ein Borstenträger der Bürste eine Aufnahmevertiefung zur Aufnahme der befestigungsseitigen Enden von Borstenfilamenten eines Borstenbesatzes der Bürste aufweist, die nach Befestigung der Borstenfilamente an dem Borstenträger durch aufgeschmolzenes Filamentmaterial ausgefüllt ist,
- Figur 5: eine perspektivische Ansicht des Borstenbesatzes der in den Figuren 1 bis 4 gezeigten Bürste nach Aufschmelzen der befestigungsseitigen Enden seiner Borstenfilamente,
- Figuren 6 bis 9: unterschiedliche Ansichten einer weiteren Ausführungsform einer vergleichbaren Bürste, deren Aufnahmevertiefung zur Aufnahme eines Borstenbesatzes von einer Struktur aus Versteifungsrippen durchsetzt ist,
- Figur 10: eine perspektivische Ansicht des Borstenbesatzes der in den Figuren 6 bis 9 gezeigten Bürste nach Aufschmelzen der befestigungsseitigen Enden seiner Borstenfilamente,
- Figur 11: eine schematisierte Darstellung von Teilen einer Bürstenherstellungsvorrichtung zur Herstellung der in den vorherigen Figuren dargestellten Bürsten, sowie
- Figuren 12 bis 14: weitere Teile der Bürstenherstellungsvorrichtung zur Veranschaulichung eines Verfahrens zur Herstellung der in den Figuren 1 bis 10 zumindest in Teilen gezeigten Bürsten.

Bei der nachfolgenden Beschreibung unterschiedlicher Ausführungsformen der Erfindung erhalten hinsichtlich ihrer Funktion übereinstimmende Elemente auch bei abweichender Formgebung übereinstimmende Bezugszeichen.

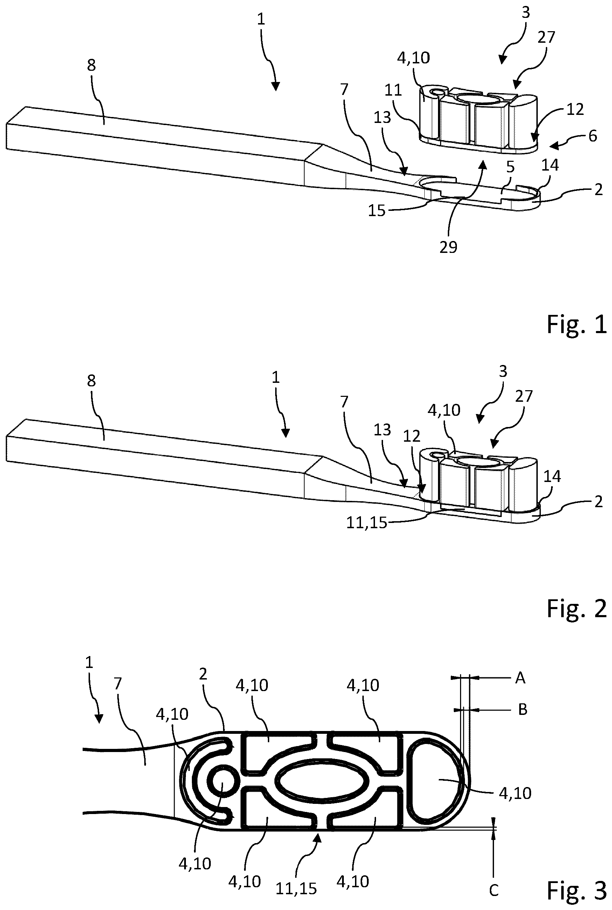

Die Figuren 1-5 sowie 6-10 zeigen zumindest Teile jeweils einer im Ganzen mit 1 bezeichneten Bürste, die als Zahnbürste ausgebildet ist. Wenn nicht explizit darauf hingewiesen wird, beziehen sich die nachfolgenden Ausführungen auf beide in den Figuren gezeigten Ausführungsformen der Bürste 1.

Die Bürste 1 weist einen Borstenträger 2 auf nämlich einen Bürstenkopf, an dem ein Borstenbesatz 3 aus Borstenfilamenten 4 befestigt ist.

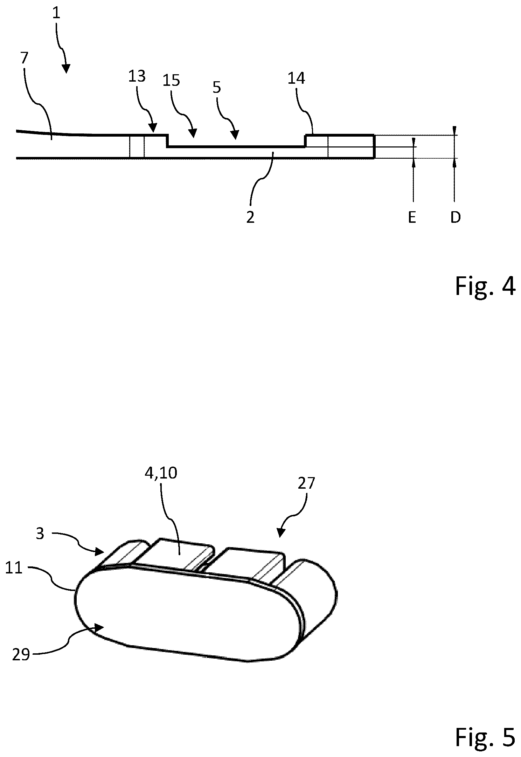

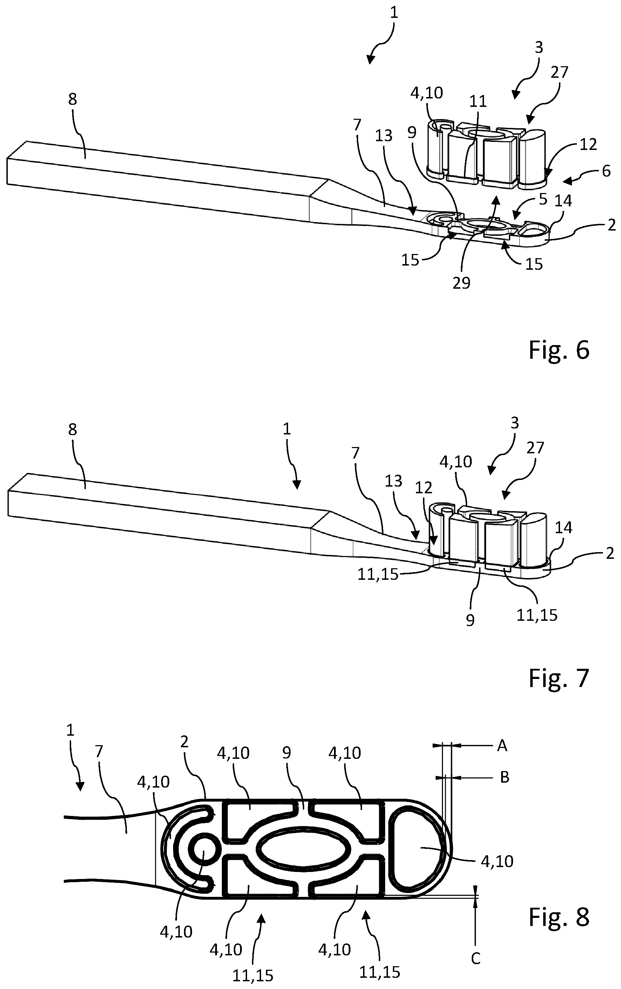

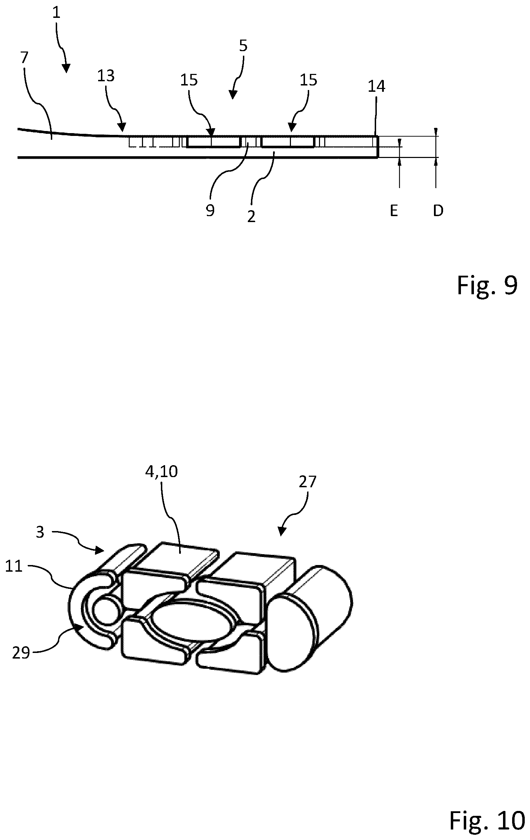

Beispielsweise die Figuren 1 und 6 verdeutlichen, dass die Bürste 1 an ihrem Borstenträger 2 eine Aufnahmevertiefung 5 aufweist. In der Aufnahmevertiefung 5 sind Borstenfilamente 4 mit ihren befestigungsseitigen Enden 6 befestigt. Die Aufnahmevertiefung 5 ist durch zur Befestigung der Borstenfilamente 4 aufgeschmolzenes Filamentmaterial der befestigungsseitigen Enden 6 an der fertigen Bürste 1 ganz oder zum vorzugsweise überwiegenden Teil ausgefüllt. Der Borstenträger 2, nämlich der Bürstenkopf, ist über einen Halsabschnitt 7 der Bürste 1 mit einem Griff 8 der Bürste 1 verbunden. Beispielsweise die Figuren 1 und 4 zeigen, dass der Borstenträger 2 vor Befestigung der Borstenfilamente 4 im Bereich der Aufnahmevertiefung 5 seine geringste, in Richtung einer Normalen auf die Aufnahmevertiefung 5 messbare Materialstärke aufweist. In benachbarten Bereichen ist der Borstenträger 2 deutlich dicker ausgebildet. Dies zeigen beispielsweise die Figuren 4 und 9, in denen die Materialstärke E im Bereich der Aufnahmevertiefung 5 und die Materialstärke D in benachbarten Abschnitten des Borstenträgers 2 durch eine Bemaßung verdeutlicht sind.

Der Borstenträger 2 ist durch das aufgeschmolzene Filamentmaterial der Borstenfilamente 4 nach Befestigung der Borstenfilamente 4 an dem Borstenträger 2 im Bereich seiner ausgefüllten Aufnahmevertiefung 5 verstärkt.

Bei dem in den Figuren 6-10 gezeigten Ausführungsbeispiel einer Bürste 1 sind innerhalb der Aufnahmevertiefung 5 Versteifungsrippen 9 ausgebildet, die dem Borstenträger 2 trotz seiner vergleichsweise geringen Materialstärke E im Bereich der Aufnahmevertiefung 5 eine gute Stabilität verleihen. Dies kann die Handhabung des Borstenträgers 2 bei der Herstellung der Bürste 1 vereinfachen.

Durch die innerhalb der Aufnahmevertiefung 5 vorhandenen Versteifungsrippen 9 ist die Aufnahmevertiefung 5 segmentiert. Die Anordnung der Versteifungsrippen 9 erzeugt ein Muster aus einzelnen Aufnahmen, die hinsichtlich Form und Anordnung einer Querschnittsform und Anordnung von Borstenbündeln 11 des Borstenbesatzes 3, die aus den Borstenfilamenten 4 bestehen, entspricht.

Die Figuren 5 und 10 verdeutlichen, dass das aufgeschmolzene Filamentmaterial des jeweils gezeigten Borstenbesatzes 3 zumindest eine Trägerplatte 11 bildet, die die Aufnahmevertiefung 5 der jeweiligen Bürste 1 nach Befestigung der Borstenfilamente 4 an dem Borstenträger 2 ausfüllt.

Durch die Trägerplatte 11 können die Borstenfilamente 4 bzw. die aus den Borstenfilamenten 4 gebildeten Borstenbündel 10 untereinander verbunden sein. Dies ist insbesondere bei der in Figur 5 gezeigten Trägerplatte 11 der Fall.

Bei dem in Figur 10 gezeigten Borstenbesatz 3 sind die Borstenfilamente 4 innerhalb eines Borstenbündels 10 durch eine Trägerplatte 11 verbunden. Jedes der insgesamt acht Borstenbündel 10 weist somit eine Trägerplatte 11 auf.

Die Trägerplatte 11 füllt die Aufnahmevertiefung 5 derart aus, dass eine Oberfläche 12 der Trägerplatte 11 bündig mit einer an die Aufnahmevertiefung 5 und den Borstenbesatz 3 angrenzenden Bürstenoberfläche 13 der Bürste 1 ist. In analoger Weise füllen auch die mehreren Trägerplatten 11 des in Figur 10 gezeigten Borstenbesatzes 3 die Teile der durch die Versteifungsrippen 9 segmentierten Aufnahmevertiefung 5 des in den Figuren 6 bis 9 gezeigten Borstenträgers 2 auf. Auch dort sind Oberflächen 12 der Trägerplatten 11 dann bündig mit einer die Aufnahmevertiefung 5 umgebenden Bürstenoberfläche 13 der Bürste 1.

Die Borstenfilamente 4 und der Borstenträger 2, wie auch der Halsabschnitt 7 und der Griff 8 der Bürste 1, bestehen aus demselben Werkstoff, der zudem eine stoffschlüssige Verbindung zwischen dem Borstenfilamenten 4 und dem Borstenträger 2 erlaubt.

Die in den Figuren gezeigten Bürsten 1 sind somit sogenannte Einstoffbürsten. Da als Werkstoff für die Herstellung des Borstenträgers 2, des Halsabschnitts 7 und des Griffs 8 sowie der Borstenfilamente 4 des Borstenbesatzes 3 der Bürste 1 ein biologisch abbaubarer Kunststoff, beispielsweise Polyamid, nämlich vorzugsweise PA 10.10 oder PA 12, verwendet wird, ist die Bürste 1 besonders umweltfreundlich und lässt sich einfach recyceln.

Die in der Aufnahmevertiefung 5 befestigten Borstenfilamente 4 und der Borstenträger 2 bilden nach ihrer Verbindung eine stofflich homogene, monolithische Einheit und sind stoffschlüssig miteinander verbunden.

Der Borstenträger 2 weist einen die Aufnahmevertiefung 5 seitlich begrenzenden Rand 14 auf. Der Rand 14 dient dazu, das aufgeschmolzene Filamentmaterial bei der Verbindung der Borstenfilamente 4 mit dem Borstenträger 2 derart zu führen, dass die Aufnahmevertiefung 5 mit dem aufgeschmolzenen Filamentmaterial der befestigungsseitigen Enden 6 der Borstenfilamente 4 ganz oder zum vorzugsweise überwiegenden Teil ausgefüllt wird.

In dem Rand 14 sind jeweils mehrere Ausnehmungen 15 ausgebildet, die durch das aufgeschmolzene Filamentmaterial der befestigungsseitigen Enden 6 der Borstenfilamente 4 bevorzugt bündig mit benachbarten Randabschnitten ausgefüllt werden. Dies verdeutlicht beispielsweise Figur 3, die eine Draufsicht auf den als Bürstenkopf ausgebildeten Borstenträger 2 der einen Bürste 1 zeigt.

Aus dieser Darstellung wird ersichtlich, dass die Ausnehmungen 15 im Rand 14 nahezu vollständig mit dem aufgeschmolzenen Filamentmaterial der befestigungsseitigen Enden 6 der Borstenfilamente 4 ausgefüllt sind.

Figuren 3 und 8 zeigen, dass der Borstenbesatz 3 an der fertigen Zahnbürste in einem Bereich, in dem der Borstenbesatz 3 benachbart zu dem Rand 14 des Borstenträgers 2, der die Aufnahmevertiefung 5 begrenzt, angeordnet ist, beispielsweise einen Abstand A von 0,5 mm bis 3 mm zu einem Umfang des Borstenträgers 2 aufweisen kann. Der Abstand A definiert in diesem Fall auch den Abstand der Borstenbündel 10 zu dem Umfang des Borstenträgers 2.

Figuren 3 und 8 zeigen auch, dass das aufgeschmolzene Filamentmaterial und damit die Trägerplatte 11 dort, wo sie vom Rand 14 des Borstenträgers 2 umgeben sind, einen Abstand B zu dem Umfang des Borstenträgers 2 von beispielsweise 0,3 mm bis 2 mm aufweisen können. Der Abstand B definiert in diesem Fall auch die Randdicke des Randes 14 des Borstenträgers 2, der die Aufnahmevertiefung 5 begrenzt und an der Trägerplatte 11 anliegt.

Figuren 3 und 8 zeigen ferner, dass das aufgeschmolzene Filamentmaterial und damit die Trägerplatte 11 im Bereich einer Ausnehmung 15 in einem die Aufnahmevertiefung 5 umgebenden Rand 14 des Borstenträgers 2 einen Abstand C zu dem Umfang des Borstenträgers 2 von beispielsweise 0 mm bis 2 mm aufweisen kann. Das aufgeschmolzene Filamentmaterial, das die Trägerplatte 11 bildet, kann im Bereich einer Ausnehmung 15 im Rand 14 somit bis ganz nach außen reichen, die Ausnehmung 15 ausfüllen und einen bündigen Abschluss mit angrenzenden Randabschnitten bilden.

Figuren 4 und 9 zeigen, dass der Borstenträger 2 randseitig und nach Befestigung der Borstenfilamente 4 an dem Borstenträger 6 der Borstenträger 2 eine Materialstärke D von 2 mm bis 6 mm aufweisen kann. Die Materialstärke D definiert hierbei die Kopfdicke des Borstenträgers.

Figuren 4 und 9 zeigen ferner, dass eine Materialstärke E im Bereich der Aufnahmevertiefung 5 vor Befestigung der Borstenfilamente 4 an dem Borstenträger 2 bei Zahnbürsten beispielsweise 1 mm bis 4 mm betragen kann. Die Differenz der Größen D und E definiert dann die Höhe des Randes 14 über der Aufnahmevertiefung 5.

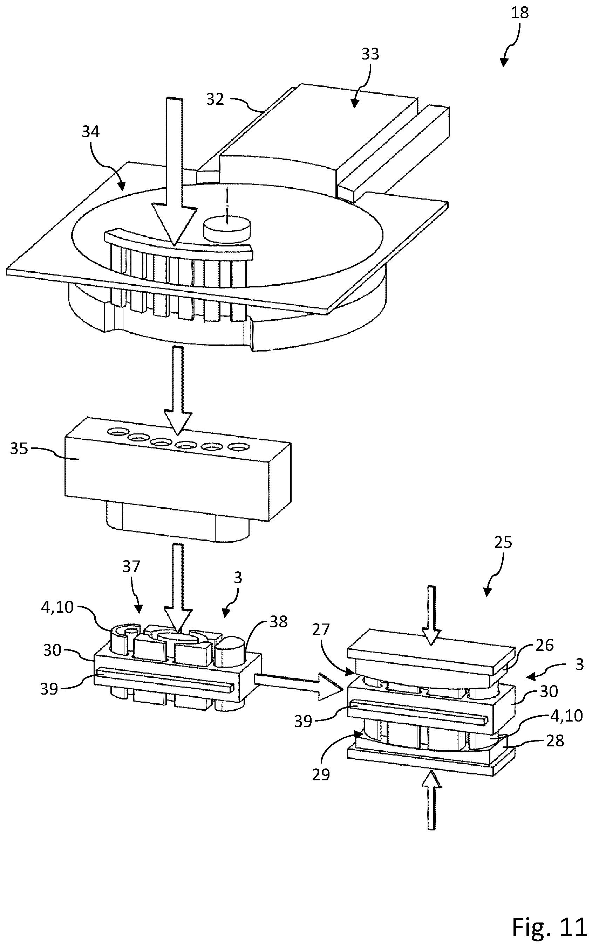

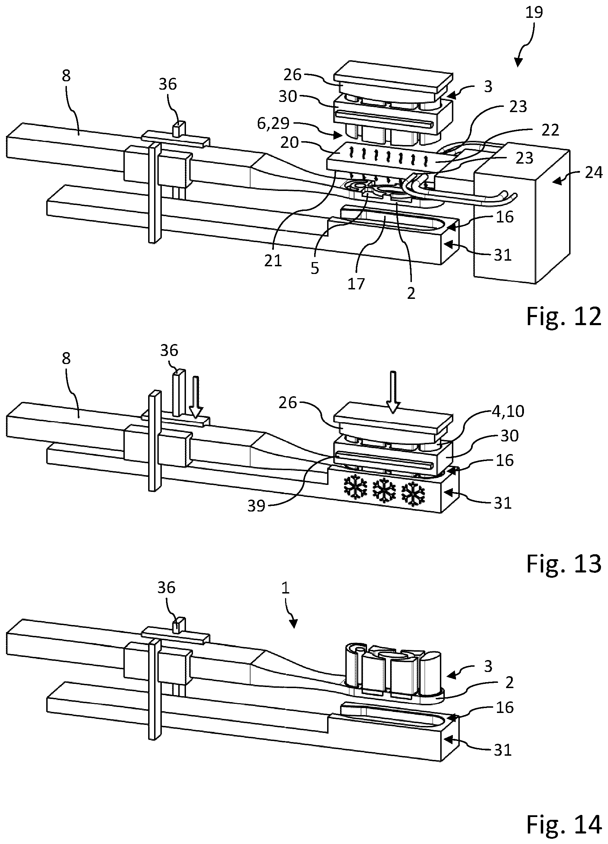

Die Figuren 11-14 veranschaulichen ein Verfahren zur Herstellung einer Bürste 1, wie sie in den Figuren 1-9 zumindest in Teilen dargestellt ist. Figur 12 zeigt, dass zunächst die befestigungsseitigen Enden 6 der Borstenfilamente 4 zur Verbindung der Borstenfilamente 4 mit dem bereitgehaltenen Borstenträger 2 erwärmt und die Aufnahmevertiefung 5 durch dabei aufgeschmolzenes Filamentmaterial der befestigungsseitigen Enden 6 der Borstenfilamente 4 beim Befestigen der Borstenfilamente 4 an dem Borstenträger 2 ganz oder zum vorzugsweise überwiegenden Teil ausgefüllt wird. Die Figur 12 zeigt ferner, dass hierbei nicht nur die befestigungsseitigen Enden 6 der Borstenfilamente 4, sondern auch der Borstenträger 2 im Bereich seiner Aufnahmevertiefung 5 berührungslos mittels Wärmestrahlung erwärmt wird.

Die befestigungsseitigen Enden 6 der Borstenfilamente 4 werden hierbei auf eine höhere Temperatur als der Borstenträger 2 im Bereich seiner Aufnahmevertiefung 5 erwärmt. Während die befestigungsseitigen Enden 6 der Borstenfilamente 4 so weit erwärmt werden, dass sie schmelzen, ist die Temperatur, auf die der Borstenträger 2 im Bereich seiner Aufnahmevertiefung 5 erwärmt wird, geringer gewählt, so dass der Borstenträger 2 im Bereich der Aufnahmevertiefung 5 nicht schmilzt. Nach ihrer Befestigung an dem Borstenträger 2 sind die Borstenfilamente 4 und der Borstenträger 2 stoffschlüssig miteinander verbunden und bilden die bereits zuvor erwähnte stofflich homogene, monolithische Einheit.

Die in dem die Aufnahmevertiefung 5 seitlich begrenzenden Rand 14 des Borstenträgers 2 vorhandenen Ausnehmungen 15 werden durch das Filamentmaterial der befestigungsseitigen Enden 6 der Borstenfilamente 4 vorzugsweise bündig mit angrenzenden Randabschnitten bei der Befestigung der Borstenfilamente 4 an dem Borstenträger 2 ausgefüllt.

Der Borstenträger 2 wird zur Befestigung der Borstenfilamente 4 in der Aufnahmevertiefung 5 in eine Form 16 eingesetzt. Die Form 16 weist eine Formwand 17 auf, die die Aufnahmevertiefung 5 des Borstenträgers 2 derart seitlich umgibt, dass der Rand 14 des Borstenträgers 2, der die Aufnahmevertiefung 5 seitlich begrenzt, seitlich abgestützt wird.

Der Borstenträger 2 wird gemäß Figur 13 in die Form 16 eingesetzt, nachdem die befestigungsseitigen Enden 6 der Borstenfilamente 4 und der Borstenträger 2 erwärmt wurden. Das Einsetzen des Borstenträgers 2 erfolgt mit einer Hebevorrichtung 36 einer nachfolgend näher erläuterten Bürstenherstellungsvorrichtung 18.

Nach dem Ausfüllen der Aufnahmevertiefung 5 durch das Filamentmaterial der befestigungsseitigen Enden 6 der Borstenfilamente 4 wird der Borstenträger 2 über die Form 16 abgekühlt.

Zur Durchführung des Verfahrens wird eine im Ganzen mit 18 bezeichnete Bürstenherstellungsvorrichtung verwendet. Die Bürstenherstellungsvorrichtung 18 weist eine Heizvorrichtung 19 auf. Die Heizvorrichtung 19 umfasst zwei Heizflächen 20 und 21, von denen eine erste Heizfläche 20 zur Erwärmung von befestigungsseitigen Enden 6 von Borstenfilamenten 4 und eine zweite Heizfläche 21 zur Erwärmung eines Borstenträgers 2 in einem Bereich seiner Aufnahmevertiefung 5 vorgesehen ist. Die Heizflächen 20 und 21 geben die Wärme dabei über Wärmestrahlung auf die Borstenfilamente 4 bzw. den Borstenträger 2 ab.

Die Heizvorrichtung 19 ist dazu eingerichtet, die beiden Heizflächen 20 und 21 und über diese die befestigungsseitigen Enden 6 der Borstenfilamente und den Borstenträger 2 im Bereich seiner Aufnahmevertiefung 5 auf unterschiedliche Temperaturen zu erwärmen. Die Heizfläche 20 kann dabei auf eine Temperatur erwärmt werden, die ausreicht, um die befestigungsseitigen Enden 6 der Borstenfilamente 3 mittels Wärmestrahlung aufzuschmelzen.

Die beiden Heizflächen 20 und 21 sind an einem gemeinsamen Heizelement 22 und hierbei an unterschiedlichen, nämlich an einander abgewandten Seiten des Heizelements 22 angeordnet.

Auf diese Weise ist es möglich, das Heizelement 22 in seine in Figur 12 gezeigte Position zwischen einem bereitgehaltenen Borstenträger 2 und bereitgehaltenen Borstenfilamenten 4 zu positionieren, um die befestigungsseitigen Enden 6 der Borstenfilamente 4 über die Heizfläche 20 und den Borstenträger 2 über die Heizfläche 21 zu erwärmen.

Die Heizvorrichtung 19 ist zur unabhängigen Regelung der Temperaturen der beiden Heizflächen 20 und 21 eingerichtet. Die Heizvorrichtung 19 umfasst zur Erfassung und Regelung der Temperaturen der beiden Heizflächen 20 und 21 für jede der Heizflächen 20 und 21 jeweils zumindest einen Temperatursensor 23.

Mithilfe der Temperatursensoren 23 ist es möglich, die Temperaturen der Heizflächen 20 und 21 zu erfassen und so die Regelung der Temperaturen der beiden Heizflächen 20 und 21 auf eine Zieltemperatur vorzunehmen. Zur Durchführung der Temperaturregelung der Heizflächen 20 und 21 ist die Heizvorrichtung 19 mit einer entsprechenden Steuereinheit 24 ausgestattet. Die Steuereinheit 24 ist mit den Temperatursensoren 23 verbunden und kann die Temperaturen der Heizflächen 20 und 21 in Abhängigkeit einer mit den Temperatursensoren 23 erfassten Abweichung einer jeweiligen Ist-Temperatur von einer Soll-Temperatur der Heizflächen 20, 21 anpassen.

Die zuvor bereits erwähnte Form 16 ist Teil der Bürstenherstellungsvorrichtung 18. Die Form 16 dient der Aufnahme und Abstützung des Borstenträgers 2 beim Befestigen der Borstenfilamente 4 an dem Borstenträger 2. Der Borstenträger 2 wird zur Befestigung der Borstenfilamente 4 in der Aufnahmevertiefung nach Erwärmung der befestigungsseitigen Enden 6 der Borstenfilamente 4 und des Borstenträgers 2 mit der Hebevorrichtung 36 der Bürstenherstellungsvorrichtung 18 in die Form 16 abgesenkt.

Die Bürstenherstellungsvorrichtung 18 umfasst auch eine Profilierungsvorrichtung 25. Die Profilierungsvorrichtung 25 ist in Figur 11 sowie in Teilen in den Figuren 12 und 13 gezeigt. Die Profilierungsvorrichtung 25 dient zur Profilierung des Borstenbesatzes 3 der herzustellenden Bürste 1.

Die Profilierungsvorrichtung 25 weist ein Profilierungswerkzeug 26 zur Profilierung einer Reinigungsseite 27 des Borstenbesatzes 3 und ein Gegenprofilierungswerkzeug 28 zur Abstützung und Profilierung einer Befestigungsseite 29 des Borstenbesatzes 3 auf.

Die Funktionsweise der Profilierungsvorrichtung 25 wird beispielsweise aus Figur 11 ersichtlich. Demnach wird das Profilierungswerkzeug 26 mit seiner formgebenden, konvex geformten Oberfläche gegen die Reinigungsseite 27 des Borstenbesatzes 3 bewegt. Dadurch werden die Borstenfilamente 4 in Bezug auf ihre Längsachse gemäß der Form des Profilierungswerkzeugs 26 axial verschoben. Durch das an der Befestigungsseite 29 des Borstenbesatzes 3 angelegte Gegenprofilierungswerkzeug 28, dessen Oberfläche eine Kontur aufweist, die der Zielkontur des Borstenbesatzes 3 an seiner Reinigungsseite 27 entspricht und konkav geformt ist, werden die Borstenfilamente 4 abgestützt und in Form gebracht.

Der unterschiedliche Überstand der Borstenfilamente 4 an der Befestigungsseite 29 des Borstenbesatzes 3 wird beim Aufschmelzen der befestigungsseitigen Enden 6 der Borstenfilamente 4 zur Befestigung der Borstenfilamente 4 an dem Borstenträger 2 einer herzustellenden Bürste 1 egalisiert.

Figur 11 zeigt, dass die Bürstenherstellungsvorrichtung 18 zudem einen Filamenthalter 30 mit einer Klemmung 39 zum klemmenden Halten der Borstenfilamente 4 des Borstenbesatzes 3 aufweist. Der Filamenthalter 30 ist als Kassette ausgebildet und kann von Station zu Station der Bürstenherstellungsvorrichtung 18 bewegt werden und die Borstenfilamente 4 bei der Profilierung des Borstenbesatzes 3 genauso wie bei dem Erwärmen der befestigungsseitigen Enden 6 der Borstenfilamente 4 an der Heizvorrichtung 19 halten. Der Filamenthalter 30 weist ein Lochbild 37 von Aufnahmelöchern 38 für Borstenbündel 10 aus Borstenfilamenten 4 auf, das einer Bündelanordnung von Borstenbündeln 10 im Borstenbesatz 3 entspricht.

Auch beim Eindrücken der befestigungsseitigen Enden 6 der Borstenfilamente 4 in die Aufnahmevertiefung 5 eines bereitgehaltenen Borstenträgers 2 wird der Filamenthalter 30 verwendet. Hierbei ist seine Klemmung 39 jedoch geöffnet. So können die Borstenfilamente 4 mithilfe des Profilierungswerkzeugs 26, das die Borstenfilamente 4 an der Befestigungsseite 27 des Borstenbesatzes 3 axial beaufschlagt, mit ihren befestigungsseitigen Enden 6 in die Aufnahmevertiefung 5 gedrückt werden. Dabei werden die Borstenfilamente 4 von dem Filamenthalter 30 und seinen durchgehenden Aufnahmelöchern 38 geführt.

Zur Kühlung des Borstenträgers 2 nach der Befestigung der Borstenfilamente 4 an dem Borstenträger 2 weist die Bürstenherstellungsvorrichtung 18 außerdem eine Kühlvorrichtung 31 auf. Die Kühlvorrichtung 31 ist dazu eingerichtet, den in der Form 16 angeordneten Borstenträger 2 abzukühlen.

Gemäß Figur 11 weist die Bürstenherstellungsvorrichtung 18 außerdem ein Magazin 32 auf, in dem ein Vorrat an losen Borstenfilamenten 33 angeordnet ist.

Mithilfe einer Abteilvorrichtung 34 der Bürstenherstellungsvorrichtung 18 können Borstenbündel 10 aus dem Vorrat an losen Borstenfilamenten 33 in dem Magazin 32 abgeteilt werden. Mithilfe einer Bündelformeinheit 35 können die Borstenbündel 10 in ihre im Borstenbesatz 3 der herzustellenden Bürste 1 gewünschte Zielform gebracht werden.

Aus der Bündelformeinheit 35 werden die Borstenbündel 10 an den Filamenthalter 30 übergeben und mit der Klemmung 39 in den als Durchgangslöchern ausgebildeten Aufnahmelöchern 38 fixiert.

Fig 14 zeigt, wie die fertige Bürste 1 nach Abkühlen des Borstenträgers 2 mit der Hebevorrichtung 36 aus der Form 16 gehoben wird. Der Borstenbesatz 3 ist nun mit dem Borstenträger 2 der Bürste 1 verbunden.

Die Erfindung befasst sich mit Verbesserungen auf dem technischen Gebiet der Bürstenherstellung und betrifft unter anderem eine Bürste 1, die einen Borstenträger 2 mit einer Aufnahmevertiefung 5 aufweist, die beim Befestigen von Borstenfilamenten 4 an dem Borstenträger 2 durch aufgeschmolzenes Filamentmaterial befestigungsseitiger Enden 6 der Borstenfilamente 4 der herzustellenden Bürste 1 ganz oder zum Teil ausgefüllt ist.

### Bezugszeichenliste

- 1: Bürste
- 2: Borstenträger, Bürstenkopf
- 3: Borstenbesatz
- 4: Borstenfilamente
- 5: Aufnahmevertiefung
- 6: befestigungsseitige Enden von 4
- 7: Halsabschnitt
- 8: Griff
- 9: Versteifungsrippe
- 10: Borstenbündel
- 11: Trägerplatte
- 12: Oberfläche von 11
- 13: Bürstenoberfläche
- 14: Rand
- 15: Ausnehmung in 15
- 16: Form
- 17: Formwand
- 18: Bürstenherstellungsvorrichtung
- 19: Heizvorrichtung
- 20: Heizfläche für 6
- 21: Heizfläche für 2
- 22: Heizelement
- 23: Temperatursensor
- 24: Steuereinheit
- 25: Profilierungsvorrichtung
- 26: Profilierungswerkzeug
- 27: Reinigungsseite
- 28: Gegenprofilierungswerkzeug
- 29: Befestigungsseite
- 30: Filamenthalter
- 31: Kühlvorrichtung
- 32: Magazin
- 33: Vorrat an losen Borstenfilamenten
- 34: Abteilvorrichtung
- 35: Bündelformeinheit
- 36: Hebevorrichtung
- 37: Lochbild von 30
- 38: Aufnahmeloch in 30
- 39: Klemmung von 30

## Patentansprüche

1. Bürste (1), insbesondere Zahnbürste, mit einem Borstenträger (2), insbesondere einem Bürstenkopf, und einem Borstenbesatz (3) aus Borstenfilamenten (4), wobei der Borstenträger (2) zumindest eine Aufnahmevertiefung (5) aufweist, in der die Borstenfilamente (4) mit ihren befestigungsseitigen Enden (6) befestigt sind, wobei zur Befestigung der Borstenfilamente (4) aufgeschmolzenes Filamentmaterial der befestigungsseitigen Enden (6) eine Trägerplatte (11) bildet und die Aufnahmevertiefung (5) ganz oder zum Teil ausfüllt, wobei die Borstenfilamente (4) und der Borstenträger (2) zumindest im Bereich der Aufnahmevertiefung (5) aus für eine stoffschlüssige Verbindung kompatiblen Werkstoffen oder aus demselben, für eine stoffschlüssige Verbindung geeigneten Werkstoff bestehen, und wobei die in der Aufnahmevertiefung (5) befestigten Borstenfilamente (4) und der Borstenträger (2) stoffschlüssig miteinander verbunden sind.

2. Bürste (1) nach dem vorherigen Anspruch, wobei der Borstenträger (2) vor Befestigung der Borstenfilamente (4) im Bereich der Aufnahmevertiefung (5) seine geringste, insbesondere in Richtung einer Normalen auf die Aufnahmevertiefung (5) messbare, Materialstärke aufweist, und/oder wobei der Borstenträger (2) durch das aufgeschmolzene Filamentmaterial verstärkt ist.

3. Bürste (1) nach einem der vorherigen Ansprüche, wobei innerhalb der Aufnahmevertiefung (5) zumindest eine Versteifungsrippe (9) ausgebildet ist.

4. Bürste (1) nach einem der vorherigen Ansprüche, wobei eine Oberfläche (12) der Trägerplatte (11) bündig mit einer an die Aufnahmevertiefung (5) und den Borstenbesatz (3) angrenzenden Bürstenoberfläche (13) der Bürste (1), insbesondere des Borstenträgers (2), ist.

5. Bürste (1) nach einem der vorherigen Ansprüche, wobei die in der Aufnahmevertiefung (5) befestigten Borstenfilamente (4) und der Borstenträger (2) eine stofflich homogene, monolithische Einheit bilden.

6. Bürste (1) nach einem der vorherigen Ansprüche, wobei die Borstenfilamente (4) und der Borstenträger (2) zumindest im Bereich der Aufnahmevertiefung (5) aus Kunststoff, insbesondere aus biologisch abbaubarem Kunststoff, beispielsweise aus Polyamid, vorzugsweise aus PA 10.10 oder PA 12, bestehen.

7. Bürste (1) nach einem der vorherigen Ansprüche, wobei der Borstenträger (2) einen die Aufnahmevertiefung (5) quer zu einer Längserstreckung der Borstenfilamente (4) begrenzenden Rand (14) aufweist.

8. Bürste (1) nach dem vorherigen Anspruch, wobei in dem Rand (14) zumindest eine Ausnehmung (15) ausgebildet ist, die durch das aufgeschmolzene Filamentmaterial, vorzugsweise bündig mit benachbarten Randabschnitten, ganz oder zum Teil ausgefüllt ist.

9. Verfahren zur Herstellung einer Bürste (1) nach einem der vorherigen Ansprüche, wobei die befestigungsseitigen Enden (6) der Borstenfilamente (4) zur Verbindung der Borstenfilamente (4) mit dem Borstenträger (2) erwärmt und die Aufnahmevertiefung (5) durch dabei aufgeschmolzenes Filamentmaterial der befestigungsseitigen Enden (6) beim Befestigen der Borstenfilamente (4) an dem Borstenträger (2) ganz oder zum Teil ausgefüllt wird, **dadurch gekennzeichnet, dass** die Borstenfilamente (4) und der Borstenträger (2) stoffschlüssig miteinander verbunden werden.

10. Verfahren nach dem vorherigen Anspruch, wobei die befestigungsseitigen Enden (6) der Borstenfilamente (4) und der Borstenträger (2) im Bereich der Aufnahmevertiefung (5) erwärmt werden.

11. Verfahren nach einem der vorherigen Ansprüche, wobei die befestigungsseitigen Enden (6) der Borstenfilamente (4) auf eine höhere Temperatur als der Borstenträger (2) im Bereich der Aufnahmevertiefung (5) erwärmt werden.

12. Verfahren nach einem der vorherigen Ansprüche, wobei zumindest eine in einem die Aufnahmevertiefung (5) seitlich begrenzenden Rand (14) vorhandene Ausnehmung (15) durch das Filamentmaterial der befestigungsseitigen Enden (6), vorzugsweise bündig mit angrenzenden Randabschnitten, ausgefüllt wird.

13. Verfahren nach einem der vorherigen Ansprüche, wobei der Borstenträger (2) zur Befestigung der Borstenfilamente (4) in der Aufnahmevertiefung (5) in eine Form (16) eingesetzt wird, die eine Formwand (17) aufweist, die die Aufnahmevertiefung (5) des Borstenträgers (2) zumindest abschnittsweise seitlich umgibt, insbesondere derart, dass ein Rand (14) des Borstenträgers (2), der die Aufnahmevertiefung (5) seitlich begrenzt, seitlich abgestützt wird.

14. Verfahren nach einem der vorherigen Ansprüche, wobei der Borstenträger (2) nach Ausfüllen der Aufnahmevertiefung (5) durch das aufgeschmolzene Filamentmaterial der befestigungsseitigen Enden (6) gekühlt wird, insbesondere über die Form (16).

15. Bürstenherstellungsvorrichtung (18) zur Herstellung von Bürsten (1) nach einem der vorherigen Ansprüche nach dem Verfahren gemäß einem der Ansprüche 9 bis 14, wobei die Bürstenherstellungsvorrichtung (18) eine Heizvorrichtung (19) aufweist, die zwei Heizflächen (20,21) umfasst, von denen eine erste Heizfläche (20) zur Erwärmung von befestigungsseitigen Enden (6) von Borstenfilamenten (4) und eine zweite Heizfläche (21) zur Erwärmung eines Borstenträgers (2) in einem Bereich seiner Aufnahmevertiefung (5) vorgesehen ist.

16. Bürstenherstellungsvorrichtung (18) nach dem vorherigen Anspruch, wobei die Heizvorrichtung (19) dazu eingerichtet ist, die Heizflächen (20,21) auf unterschiedliche Temperaturen zu erwärmen, vorzugsweise wobei die Heizvorrichtung (19) dazu eingerichtet ist, die erste Heizfläche (20) auf eine Temperatur zu erwärmen, die ausreicht, um die befestigungsseitigen Enden (6) der Borstenfilamente (4) aufzuschmelzen, und/oder wobei die beiden Heizflächen (20,21) an einem gemeinsamen Heizelement (22), insbesondere an unterschiedlichen Seiten, vorzugsweise an einander abgewandten Seiten des Heizelements (22), angeordnet sind.

17. Bürstenherstellungsvorrichtung (18) nach einem der vorherigen Ansprüche, wobei die Heizvorrichtung (19) zur vorzugsweise unabhängigen Regelung der Temperaturen der beiden Heizflächen (20,21) eingerichtet ist, insbesondere wobei die Heizvorrichtung (19) eine Steuereinheit (24) und zumindest einen Temperatursensor (23) zur Erfassung und Regelung der Temperatur zumindest einer der beiden Heizflächen (20,21) aufweist, vorzugsweise wobei jeder Heizfläche (20,21) zumindest ein Temperatursensor (23) zugeordnet ist.

18. Bürstenherstellungsvorrichtung (18) nach einem der vorherigen Ansprüche, wobei die Bürstenherstellungsvorrichtung (18) eine Form (16) zur Aufnahme und Abstützung des Borstenträgers (2) aufweist.

19. Bürstenherstellungsvorrichtung (18) nach einem der vorherigen Ansprüche, wobei die Bürstenherstellungsvorrichtung (18) eine Profilierungsvorrichtung (25) zur Profilierung eines Borstenbesatzes (3) einer herzustellenden Bürste (1) aufweist.

20. Bürstenherstellungsvorrichtung (18) nach einem der vorherigen Ansprüche, wobei die Profilierungsvorrichtung (25) ein Profilierungswerkzeug (26) zur Profilierung einer Reinigungsseite (27) des Borstenbesatzes (3) und/oder ein Gegenprofilierungswerkzeug (28) zur Profilierung einer Befestigungsseite (29) des Borstenbesatzes (3) und/oder zur Abstützung der Borstenfilamente (4) bei der Profilierung des Borstenbesatzes (3) aufweist.

21. Bürstenherstellungsvorrichtung (18) nach einem der vorherigen Ansprüche, wobei die Bürstenherstellungsvorrichtung (18) einen Filamenthalter (30) zum, insbesondere klemmenden, Halten der Borstenfilamente (4) des Borstenbesatzes (3) aufweist, und/oder wobei die Bürstenherstellungsvorrichtung (18) eine Kühlvorrichtung (31) zur Kühlung des Borstenträgers (2) aufweist.

## Claims

1. Brush (1), in particular a toothbrush, having a bristle carrier (2), in particular a brush head, and a bristle trim (3) made of bristle filaments (4), wherein the bristle carrier (2) has at least one receiving recess (5) in which the bristle filaments (4) are fastened with their fastening-side ends (6), wherein, for fastening the bristle filaments (4), molten filament material of the fastening-side ends (6) forms a carrier plate (11) and fills the receiving recess (5) completely or partially, wherein the bristle filaments (4) and the bristle carrier (2) consist, at least in the area of the receiving recess (5), of materials compatible for a materially bonded connection or of the same material suitable for a materially bonded connection, and wherein the bristle filaments (4) fastened in the receiving recess (5) and the bristle carrier (2) are connected to each other in a materially bonded manner.

2. Brush (1) according to the preceding claim, wherein the bristle carrier (2) has its smallest material thickness, in particular measurable in the direction of a normal to the receiving recess (5), in the area of the receiving recess (5) before the bristle filaments (4) are fastened, and/or wherein the bristle carrier (2) is reinforced by the molten filament material.

3. Brush (1) according to one of the preceding claims, wherein at least one stiffening rib (9) is formed within the receiving recess (5).

4. Brush (1) according to one of the preceding claims, wherein a surface (12) of the carrier plate (11) is flush with a brush surface (13) of the brush (1), in particular of the bristle carrier (2), adjacent to the receiving recess (5) and the bristle trim (3).

5. Brush (1) according to one of the preceding claims, wherein the bristle filaments (4) fixed in the receiving recess (5) and the bristle carrier (2) form a materially homogeneous, monolithic unit.

6. Brush (1) according to one of the preceding claims, wherein the bristle filaments (4) and the bristle carrier (2) are made of plastic, in particular biodegradable plastic, for example polyamide, preferably PA 10.10 or PA 12, at least in the area of the receiving recess (5).

7. Brush (1) according to one of the preceding claims, wherein the bristle carrier (2) has an edge (14) delimiting the receiving recess (5) transversely to a longitudinal extension of the bristle filaments (4).

8. Brush (1) according to the preceding claim, wherein at least one recess (15) is formed in the edge (14), which is completely or partially filled by the molten filament material, preferably flush with adjacent edge sections.

9. Method for manufacturing a brush (1) according to one of the preceding claims, wherein the fastening-side ends (6) of the bristle filaments (4) are heated to connect the bristle filaments (4) to the bristle carrier (2) and the receiving recess (5) is filled completely or partially by filament material molten during this process from the fastening-side ends (6) when fastening the bristle filaments (4) to the bristle carrier (2), **characterized in that** the bristle filaments (4) and the bristle carrier (2) are connected to each other in a materially bonded manner.

10. Method according to the preceding claim, wherein the fastening-side ends (6) of the bristle filaments (4) and the bristle carrier (2) are heated in the area of the receiving recess (5).

11. Method according to one of the preceding claims, wherein the fastening-side ends (6) of the bristle filaments (4) are heated to a higher temperature than the bristle carrier (2) in the area of the receiving recess (5).

12. Method according to one of the preceding claims, wherein at least one recess (15) present in an edge (14) laterally delimiting the receiving recess (5) is filled by the filament material of the fastening-side ends (6), preferably flush with adjacent edge sections.

13. Method according to one of the preceding claims, wherein the bristle carrier (2) is inserted into a mold (16) for fastening the bristle filaments (4) in the receiving recess (5), said mold having a mold wall (17) which surrounds the receiving recess (5) of the bristle carrier (2) at least in sections laterally, in particular in such a way that an edge (14) of the bristle carrier (2) which laterally bounds the receiving recess (5) is laterally supported.

14. Method according to one of the preceding claims, wherein the bristle carrier (2) is cooled after filling the receiving recess (5) with the molten filament material of the fastening-side ends (6), in particular via the mold (16).

15. Brush manufacturing device (18) for manufacturing brushes (1) according to one of the preceding claims in accordance with the method according to one of claims 9 to 14, wherein the brush manufacturing device (18) has a heating device (19) comprising two heating surfaces (20, 21), of which a first heating surface (20) is provided for heating fastening-side ends (6) of bristle filaments (4) and a second heating surface (21) is provided for heating a bristle carrier (2) in a region of its receiving recess (5).

16. Brush manufacturing device (18) according to the preceding claim, wherein the heating device (19) is designed to heat the heating surfaces (20, 21) to different temperatures, preferably wherein the heating device (19) is designed to heat the first heating surface (20) to a temperature sufficient to melt the fastening-side ends (6) of the bristle filaments (4), and/or wherein the two heating surfaces (20, 21) are arranged on a common heating element (22), in particular on different sides, preferably on sides of the heating element (22) facing away from each other.

17. Brush manufacturing device (18) according to one of the preceding claims, wherein the heating device (19) is designed for preferably independent control of the temperatures of the two heating surfaces (20, 21), in particular wherein the heating device (19) has a control unit (24) and at least one temperature sensor (23) for detecting and controlling the temperature of at least one of the two heating surfaces (20, 21), preferably wherein at least one temperature sensor (23) is assigned to each heating surface (20, 21).

18. Brush manufacturing device (18) according to one of the preceding claims, wherein the brush manufacturing device (18) comprises a mold (16) for receiving and supporting the bristle carrier (2).

19. Brush manufacturing device (18) according to one of the preceding claims, wherein the brush manufacturing device (18) has a profiling device (25) for profiling a bristle trim (3) of a brush (1) to be manufactured.

20. Brush manufacturing device (18) according to one of the preceding claims, wherein the profiling device (25) comprises a profiling tool (26) for profiling a cleaning side (27) of the bristle trim (3) and/or a counter-profiling tool (28) for profiling a fastening side (29) of the bristle trim (3) and/or for supporting the bristle filaments (4) during the profiling of the bristle trim (3).

21. Brush manufacturing device (18) according to one of the preceding claims, wherein the brush manufacturing device (18) has a filament holder (30) for holding, in particular clamping, the bristle filaments (4) of the bristle trim (3), and/or wherein the brush manufacturing device (18) has a cooling device (31) for cooling the bristle carrier (2).

## Revendications

1. Brosse (1), en particulier brosse à dents, avec un support de poils de brosse (2), en particulier une tête de brosses, et une garniture (3) de filaments de poil de brosse (4), dans laquelle le support de poils de brosse (2) comporte au moins un réceptacle en creux (5) dans lequel les filaments de poil de brosse (4) sont fixés à leurs extrémités côté fixation (6),
dans laquelle, pour fixer les filaments de poil de brosse (4), du matériau de filament fondu aux extrémités côté fixation (6) forme une plaque de support (11) et remplit complètement ou partiellement le réceptacle en creux (5),
dans laquelle les filaments de poil de brosse (4) et le support de poils de brosse (2) se composent, au moins dans la région du réceptacle en creux (5), de matériaux compatibles avec une liaison par solidarité de matière ou se composent du même matériau compatible avec une liaison par solidarité de matière, et
dans laquelle les filaments de poil de brosse (4) fixés dans le réceptacle en creux (5) et le support de poils de brosse (2) sont reliés entre eux par solidarité de matière.

2. Brosse (1) selon la revendication précédente, dans laquelle le support de poils de brosse (2) présente son épaisseur de matériau la plus faible mesurable, en particulier dans la direction d'une perpendiculaire au réceptacle en creux (5), avant la fixation des filaments de poil de brosse (4) dans la région du réceptacle en creux (5) et/ou dans laquelle le support de poils de brosse (2) est renforcé par le matériau de filament fondu.

3. Brosse (1) selon l'une des revendications précédentes, dans laquelle au moins une nervure raidisseuse (9) est formée à l'intérieur du réceptacle en creux (5).

4. Brosse (1) selon l'une des revendications précédentes, dans laquelle une surface (12) de la plaque de support (11) affleure de niveau avec une surface de brosse (13) de la brosse (1), en particulier du support de poils de brosse (2), limitrophe du réceptacle en creux (5) et de la garniture (3).

5. Brosse (1) selon l'une des revendications précédentes, dans laquelle les filaments de poil de brosse (4) fixés dans le réceptacle en creux (5) et le support de poils de brosse (2) forment une unité monolithique de matériau homogène.

6. Brosse (1) selon l'une des revendications précédentes, dans laquelle les filaments de poil de brosse (4) et le support de poils de brosse (2) se composent de matière plastique au moins dans la région du réceptacle en creux (5), en particulier de matière plastique biodégradable, par exemple de polyamide, de préférence de PA 10.10 ou de PA 12.

7. Brosse (1) selon l'une des revendications précédentes, dans laquelle le support de poils de brosse (2) présente un bord (14) qui délimite le réceptacle en creux (5) transversalement par rapport à une étendue longitudinale des filaments de poil de brosse (4).

8. Brosse (1) selon la revendication précédente, dans laquelle est formé dans le bord (14) au moins un creux (15) qui est entièrement ou partiellement rempli par le matériau de filament fondu, de préférence en affleurement avec les parties de bord limitrophes.

9. Procédé pour la fabrication d'une brosse (1) selon l'une des revendications précédentes, dans lequel les extrémités côté fixation (6) des filaments de poil de brosse (4) sont chauffées en vue de la liaison des filaments de poil de brosse (4) au support de poils de brosse (2) et le réceptacle en creux (5) est complètement ou partiellement rempli par du matériau de filament qui fond à ce moment aux extrémités côté fixation (6) lors de la fixation des filaments de poil de brosse (4) au support de poils de brosse (2), **caractérisé en ce que** les filaments de poil de brosse (4) et le support de poils de brosse (2) sont reliés entre eux par solidarité de matière.

10. Procédé selon la revendication précédente, dans laquelle les extrémités côté fixation (6) des filaments de poil de brosse (4) et le support de poils de brosse (2) sont chauffés dans la région du réceptacle en creux (5).

11. Procédé selon l'une des revendications précédentes, dans lequel les extrémités côté fixation (6) des filaments de poil de brosse (4) sont chauffés à une température plus élevée que le support de poils de brosse (2) dans la région du réceptacle en creux (5).

12. Procédé selon l'une des revendications précédentes, dans lequel au moins un creux (15) présent dans un bord (14) délimitant latéralement le réceptacle en creux (5) est rempli par le matériau de filament des extrémités côté fixation (6), de préférence en affleurement avec les parties de bord limitrophes.

13. Procédé selon l'une des revendications précédentes, dans lequel le support de poils de brosse (2) est inséré, pour fixer les filaments de poil de brosse (4) dans le réceptacle en creux (5), dans un moule (16) qui présente une paroi de moule (17) entourant au moins partiellement le réceptacle en creux (5) du support de poils de brosse (2) latéralement, en particulier de telle façon qu'un bord (14) du support de poils de brosse (2) qui délimite le réceptacle en creux (5) latéralement soit soutenu latéralement.

14. Procédé selon l'une des revendications précédentes, dans lequel le support de poils de brosse (2) est refroidi après le remplissage du réceptacle en creux (5) par le matériau de filament fondu des extrémités côté fixation (6), en particulier à l'aide du moule (16).

15. Dispositif pour fabriquer des brosses (18) pour la fabrication de brosses (1) selon l'une des revendications précédentes par le procédé selon l'une des revendications 9 à 14, lequel dispositif pour fabriquer des brosses (18) présente un dispositif de chauffage (19) qui présente deux surfaces chauffantes (20, 21) dont une première surface chauffante (20) est prévue pour chauffer des extrémités côté fixation (6) de filaments de poil de brosse (4) et une deuxième surface chauffante (21) pour chauffer un support de poils de brosse (2) dans la région de son réceptacle en creux (5).

16. Dispositif pour fabriquer des brosses (18) selon la revendication précédente, dans lequel le dispositif de chauffage (19) est configuré pour chauffer les surfaces chauffantes (20, 21) à des températures différentes, de préférence dans lequel le dispositif de chauffage (19) est configuré pour chauffer la première surface chauffante (20) à une température suffisante pour faire fondre les extrémités côté fixation (6) des filaments de poil de brosse (4), et/ou dans lequel les deux surfaces chauffantes (20, 21) sont disposées sur un élément chauffant (22) commun, en particulier sur des côtés différents, de préférence sur des côtés opposés l'un à l'autre de l'élément chauffant (22).

17. Dispositif pour fabriquer des brosses (18) selon l'une des revendications précédentes, dans lequel le dispositif de chauffage (19) est configuré pour la régulation de préférence indépendante des températures des deux surfaces chauffantes (20, 21), en particulier dans lequel le dispositif de chauffage (19) comporte une unité de commande (24) et au moins une sonde de température (23) pour acquérir et réguler la température d'au moins une des deux surfaces chauffantes (20, 21), de préférence dans lequel au moins une sonde de température (23) est associée à chaque surface chauffante (20, 21).

18. Dispositif pour fabriquer des brosses (18) selon l'une des revendications précédentes, dans lequel le dispositif pour fabriquer des brosses (18) comporte un moule (16) destiné à recevoir et à soutenir le support de poils de brosse (2).

19. Dispositif pour fabriquer des brosses (18) selon l'une des revendications précédentes, dans lequel le dispositif pour fabriquer des brosses (18) comporte un dispositif de profilage (25) pour le profilage d'une garniture (3) d'une brosse (1) à fabriquer.

20. Dispositif pour fabriquer des brosses (18) selon l'une des revendications précédentes, dans lequel le dispositif de profilage (25) comporte un outil de profilage (26) pour le profilage d'un côté nettoyant (27) de la garniture (3) et/ou un outil de profilage opposé (28) pour le profilage d'un côté de fixation (29) de la garniture (3) et/ou pour le soutien des filaments de poil de brosse (4) lors du profilage de la garniture (3).

21. Dispositif pour fabriquer des brosses (18) selon l'une des revendications précédentes, dans lequel le dispositif pour fabriquer des brosses (18) comporte un porte-filaments (30) destiné à retenir, en particulier à serrer, les filaments de poil de brosse (4) de la garniture (3) et/ou dans lequel le dispositif pour fabriquer des brosses (18) comporte un dispositif de refroidissement (31) pour refroidir le support de poils de brosse (2).
